(19) Europäisches Patentamt
European Patent Office
Office européen des brevets

(11) **EP 3 334 027 B1**

(12) **EUROPÄISCHE PATENTSCHRIFT**

(45) Veröffentlichungstag und Bekanntmachung des Hinweises auf die Patenterteilung:
**18.01.2023 Patentblatt 2023/03**

(21) Anmeldenummer: **17201532.3**

(22) Anmeldetag: **14.11.2017**

(51) Internationale Patentklassifikation (IPC):
**H02M 7/217** *(2006.01)* **H02J 50/00** *(2016.01)*
**H02M 3/158** *(2006.01)* **H02J 7/34** *(2006.01)*

(52) Gemeinsame Patentklassifikation (CPC):
**H02M 7/217; H02J 50/00; H02J 50/001;**
**H02M 3/1582;** H02J 7/34; H02J 2207/20

(54) **UMRICHTERVORRICHTUNG ZUR ENERGIEGEWINNUNG SOWIE ENERGIEERZEUGUNGSVORRICHTUNG MIT EINER DERARTIGEN UMRICHTERVORRICHTUNG UND VERWENDUNG EINER DERARTIGEN UMRICHTERVORRICHTUNG**

CONVERTER APPARATUS FOR ENERGY HARVESTING AND ENERGY GENERATOR HAVING SUCH A CONVERTER APPARATUS, AND USE OF SUCH A CONVERTER APPARATUS

DISPOSITIF FORMANT CONVERTISSEUR DE RÉCUPÉRATION D'ÉNERGIE AINSI QUE DISPOSITIF DE GÉNÉRATION D'ÉNERGIE DOTÉ D'UN TEL DISPOSITIF FORMANT CONVERTISSEUR ET UTILISATION D'UN TEL DISPOSITIF FORMANT CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2016 DE 102016224639**

(43) Veröffentlichungstag der Anmeldung:
**13.06.2018 Patentblatt 2018/24**

(73) Patentinhaber: **Würth Elektronik eiSos GmbH & Co. KG**
**74638 Waldenburg (DE)**

(72) Erfinder:
• **Shousha, Mahmoud**
**85386 Eching (DE)**
• **Haug, Martin**
**81475 München (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
**DE-A1-102009 014 702**

• ANUPRIYA SRIRAMULU ET AL: "Implementation of an efficient AC-DC converter for low voltage energy harvesting", ENGINEERING EDUCATION: INNOVATIVE PRACTICES AND FUTURE TRENDS (AICERA), 2012 IEEE INTERNATIONAL CONFERENCE ON, IEEE, 19. Juli 2012 (2012-07-19), Seiten 1-6, XP032239216, DOI: 10.1109/AICERA.2012.6306750 ISBN: 978-1-4673-2267-6
• SINGH SHIKHA ET AL: "Power corrected bridgeless converter based switched mode power supply factor", IET POWER ELECTRO, IET, UK, Bd. 9, Nr. 8, 29. Juni 2016 (2016-06-29), Seiten 1684-1693, XP006057098, ISSN: 1755-4535, DOI: 10.1049/IET-PEL.2014.0933
• LEE CHI-KWAN ET AL: "High-Frequency-Fed Unity Power-Factor AC-DC Power Converter With One Switching Per C", IEEE TRANSACTIONS ON POWER ELECTRONICS, INSTITUTE OF ELECTRICAL AND ELECTRONICS ENGINEERS, USA, Bd. 30, Nr. 4, 1. April 2015 (2015-04-01), Seiten 2148-2156, XP011563494, ISSN: 0885-8993, DOI: 10.1109/TPEL.2014.2330631 [gefunden am 2014-11-03]

- MITCHESON P D ET AL: "Power processing circuits for electromagnetic, electrostatic and piezoelectric inertial energy scavengers", MICROSYSTEM TECHNOLOGIES ; MICRO AND NANOSYSTEMS INFORMATION STORAGE AND PROCESSING SYSTEMS, SPRINGER, BERLIN, DE, vol. 13, no. 11-12, 4 January 2007 (2007-01-04), pages 1629-1635, XP019518813, ISSN: 1432-1858, DOI: 10.1007/S00542-006-0339-0
- HSIEH CHEN-YU ET AL: "A simple Bi-directional bridgeless AC/DC buck-boost converter for automotive energy harvesting", IECON 2014 - 40TH ANNUAL CONFERENCE OF THE IEEE INDUSTRIAL ELECTRONICS SOCIETY, IEEE, 29 October 2014 (2014-10-29), pages 1937-1943, XP032739028, DOI: 10.1109/IECON.2014.7048767 [retrieved on 2015-02-24]

**Beschreibung**

Die Erfindung betrifft eine Umrichtervorrichtung zur Energiegewinnung sowie einen Energieerzeuger mit einer derartigen Umrichtervorrichtung. Ferner betrifft die Erfindung die Verwendung einer derartigen Umrichtervorrichtung.

Energy Harvesting bezeichnet die Gewinnung kleiner Mengen von elektrischer Energie aus Quellen in der Umgebung eines mobilen elektrischen Gerätes, wie beispielsweise aus der Umgebungstemperatur oder aus Vibrationen. Entsprechende Energiegewinnungseinrichtungen, wie beispielsweise thermoelektrische Generatoren oder piezoelektrische Kristalle, stellen entweder eine Spannung gleicher Polarität (DC-Spannung) oder eine Spannung wechselnder Polarität (AC-Spannung) bereit. Um die mittels der Energiegewinnungseinrichtung bereitgestellte Energie effizient nutzen zu können, ist eine Umrichtervorrichtung erforderlich.

Aus dem Fachartikel "Implementation of an Efficient AC-DC Converter for Low Voltage Energy Harvesting" von Anupriya Sriramulu et al., IEEE International Conference on Engineering Education 2012, Seiten 1 bis 6, ist ein AC-DC-Umrichter für niedrige Spannungen bekannt, die von einem elektromagnetischen Energy Harvester erzeugt werden. In einem ersten Betriebsmodus während einer positiven Spannungshalbwelle des Energy Harvesters ist ein erster elektronischer Schalter geschlossen, sodass die erzeugte elektrische Energie in einer ersten Spule gespeichert wird. In einem darauffolgenden zweiten Betriebsmodus während der positiven Spannungshalbwelle ist der erste elektronische Schalter geöffnet, sodass die in der ersten Spule gespeicherte Energie über eine erste Diode in einem Kondensator gespeichert wird. In einem dritten Betriebsmodus während einer negativen Spannungshalbwelle des Energy Harvesters ist ein zweiter elektronischer Schalter geschlossen, sodass die erzeugte elektrische Energie in einer zweiten Spule gespeichert wird. In einem darauffolgenden vierten Betriebsmodus während der negativen Spannungshalbwelle wird die in der zweiten Spule gespeicherte Energie über eine zweite Diode in dem Kondensator gespeichert. Parallel zu dem Kondensator ist ein Verbraucher geschaltet.

Aus dem Fachartikel "Power corrected bridgeless converter based switched mode power supply factor" von Singh Shikha et al., IET Power Electronics, 2016, Seiten 1684 bis 1693, ist eine Energieversorgungseinrichtung für Personal Computer bekannt.

Aus dem Fachartikel "High-Frequency-Fed Unity Power-Factor AC-DC Power Converter With One Switching Per Cycle" von Lee Chi-Kwan et al., IEEE Transactions on Power Electronics, 2015, ist ein Leistungsumrichter bekannt, der mit einer hohen Frequenz betreibbar ist.

Aus der DE 10 2009 014 702 A1 ist eine Schaltungsanordnung zur Nutzbarmachung elektrischer Energie von Energy Harvestem bekannt.

Aus dem Fachartikel "Power processing circuits for electromagnetic, electrostatic and piezoelectric inertial energy scavengers" von P. D. Mitcheson et al., Microsystem Technologies, 2007, S. 1629-1635 ist eine Umrichtervorrichtung zur Energiegewinnung mit zwei Schaltungen für einen positiven Halbzyklus und einen negativen Halbzyklus einer erzeugten Spannung bekannt. Die Schaltungen sind jeweils als Boost-Converter ausgebildet.

Aus dem Fachartikel "A Simple Bi-directional Bridgeless AC/DC Buck-Boost Converter for Automotive Energy Harvesting" von Chen-Yu Hsieh et al., 40th annual conference of the IEEE Industrial Electronics Society, 2014, S. 1937-1943 ist ein AC-DC-Umrichter für eine Wechselspannung bekannt, die von einem Energy Harvester erzeugt wird. Der AC-DC-Umrichter bildet für einen positiven Halbzyklus und einen negativen Halbzyklus einer erzeugten Spannung jeweils einen Buck-Boost-Converter aus.

Der Erfindung liegt die Aufgabe zugrunde, eine einfache, zuverlässige, effiziente und universell einsetzbare Umrichtervorrichtung zur Energiegewinnung zu schaffen.

Diese Aufgabe wird durch eine Umrichtervorrichtung mit den Merkmalen des Anspruchs 1 gelöst. Der Umrichter ist als Tief-Hochsetzsteller ausgebildet. Dadurch, dass der Umrichter eine erste Ladeschaltung, die mittels einer an den Eingangsanschlüssen anliegenden positiven Spannung betreibbar ist, und eine zweite Ladeschaltung, die mittels einer an den Eingangsanschlüssen anliegenden negativen Spannung betreibbar ist, umfasst, ermöglicht der Umrichter die Wandlung einer an den Eingangsanschlüssen anliegenden Spannung mit wechselnder Polarität in eine Gleichspannung (AC/DC-Wandlung) und die Wandlung einer an den Eingangsanschlüssen anliegenden Spannung mit gleicher Polarität in eine Gleichspannung (DC/DC-Wandlung). Hierzu weisen die Ladeschaltungen jeweils einen elektronischen Schalter und einen in Reihe dazu geschalteten elektrischen Energiespeicher auf. Mittels der Steuereinrichtung werden in Abhängigkeit der Polarität der an den Eingangsanschlüssen anliegenden Spannung die elektrischen Schalter angesteuert, so dass in Abhängigkeit der Polarität die erste Ladeschaltung oder die zweite Ladeschaltung oder wechselnd beide Ladeschaltungen betrieben werden.

Die Umrichtervorrichtung gewährleistet eine hohe Zuverlässigkeit und Effizienz. Dadurch, dass bei den elektronischen Schaltern jeweils zwei elektronische Schaltelemente in Reihe geschaltet sind, werden parasitäre Ströme und hierdurch verursachte Verluste vermieden. Die zwei elektronischen Schaltelemente weisen insbesondere eine Back-to-back-Anordnung auf. Hierdurch werden Verluste und eine Fehlfunktion in Folge von parasitären Strömen vermieden. Parasitäre Ströme werden insbesondere durch Inversdioden (Body-Dioden) verursacht. Aufgrund der Back-to-back-Anordnung weisen die Inversdioden unterschiedliche Sperrrichtungen auf. Die elektronischen Schaltelemente sind ausgewählt aus der Gruppe Feldeffekttransistor (n-Kanal oder p-Kanal) und Bipolartransistor (NPN oder PNP). Die elektronischen Schaltelemente sind vorzugsweise als MOSFETs ausgebildet, insbesondere als n-Kanal MOSFETs.

Die Umrichtervorrichtung gewährleistet eine einfache und effiziente Speicherung und Bereitstellung von elektrischer Energie. Die erste Spule ist parallel zu dem ersten Kondensator geschaltet. Das erste Sperrelement ist in Reihe zu der ersten Spule oder dem ersten Kondensator geschaltet. Das erste Sperrelement ist beispielsweise als Diode ausgebildet. Das erste Sperrelement ist derart angeordnet, dass in einem ersten Schaltzustand, wenn der erste elektronische Schalter eingeschaltet ist, mittels der an den Eingangsanschlüssen anliegenden positiven Spannung in der ersten Spule Energie gespeichert wird. In dem ersten Schaltzustand ist ein Aufladen des ersten Kondensators durch das erste Sperrelement unterbunden. In einem darauf folgenden zweiten Schaltzustand, wenn der erste elektronische Schalter ausgeschaltet ist, wird der erste Kondensator mittels eines Stromflusses über das erste Sperrelement durch die erste Spule geladen.

Die zweite Spule ist parallel zu dem zweiten Kondensator geschaltet. Das zweite Sperrelement ist in Reihe zu der zweiten Spule oder dem zweiten Kondensator geschaltet. Das zweite Sperrelement ist beispielsweise als Diode ausgebildet. Das zweite Sperrelement ist derart angeordnet, dass in einem ersten Schaltzustand, wenn der zweite elektronische Schalter eingeschaltet ist, mittels der an den Eingangsanschlüssen anliegenden negativen Spannung in der zweiten Spule Energie gespeichert wird. In dem ersten Schaltzustand ist ein Aufladen des zweiten Kondensators durch das zweite Sperrelement unterbunden. In einem darauf folgenden zweiten Schaltzustand, wenn der zweite elektronische Schalter ausgeschaltet ist, wird der zweite Kondensator mittels eines Stromflusses über das zweite Sperrelement durch die zweite Spule geladen.

Bei einem Betrieb der Umrichtervorrichtung mit einer Energiegewinnungseinrichtung, die eine Spannung wechselnder Polarität erzeugt, ist der erste Kondensator und der zweite Kondensator mit jeweils einem der Ausgangsanschlüsse verbunden (AC/DC-Wandlung). Bei einem Betrieb der Umrichtervorrichtung mit einer Energiegewinnungseinrichtung, die eine Spannung gleicher Polarität erzeugt, ist in Abhängigkeit der Polarität entweder der erste Kondensator oder der zweite Kondensator mit den Ausgangsanschlüssen verbunden (DC/DC-Wandlung).

Die Umrichtervorrichtung gewährleistet eine hohe Effizienz. In die Steuereinrichtung ist ein Regelkreis für die Eingangsimpedanz des Umrichters implementiert. Die Eingangsimpedanz wird an den Eingangsanschlüssen ermittelt. Hierzu umfasst die Steuereinrichtung einen Spannungs-Messsensor zur Messung der an den Eingangsanschlüssen anliegenden Spannung und einen Strom-Messsensor zur Messung eines von der Energiegewinnungseinrichtung zu dem Umrichter fließenden Stroms. Aus der gemessenen Spannung und dem gemessenen Strom wird mittels der Steuereinrichtung eine Eingangsimpedanz ermittelt. Aus einer Soll-Eingangsimpedanz und der ermittelten Eingangsimpedanz wird eine Regelabweichung bzw. eine Differenz bestimmt, die dem Impedanzregler zugeführt wird. Der Impedanzregler ist beispielsweise als PID-Regler ausgebildet. Der Impedanzregler stellt einer Schalteinheit eine Stellgröße bereit. Mittels der Stellgröße wird der Tastgrad D und somit die Eingangsimpedanz des Umrichters eingestellt. Die Schalteinheit ist beispielsweise als digitaler Pulsweitenmodulator ausgebildet. Die Eingangsimpedanz wird vorzugsweise derart geregelt, dass die Eingangsimpedanz rein ohmsch ist und somit die gemessene Spannung und der gemessene Strom im Wesentlichen in Phase sind. Die Soll-Eingangsimpedanz wird insbesondere empirisch in Versuchen ermittelt. Die Soll-Eingangsimpedanz ist beispielsweise ein Widerstandswert, bei dem eine hohe Effizienz, insbesondere eine maximale Effizienz bei der Energiegewinnung erzielt wird.

Die Umrichtervorrichtung ist einfach aufgebaut und universell einsetzbar. Dadurch, dass die erste Ladeschaltung und die zweite Ladeschaltung parallel zueinander geschaltet sind, sind diese mittels der zugehörigen elektronischen Schalter in einfacher Weise nach Bedarf betreibbar. Der jeweilige elektronische Schalter ist mit einem der Eingangsanschlüsse und der jeweils zugehörige Energiespeicher mit dem anderen der Eingangsanschlüsse verbunden. Vorzugsweise sind die Energiespeicher mit dem ersten Eingangsanschluss und die elektronischen Schalter mit dem zweiten Eingangsanschluss verbunden. Hierdurch wird ein symmetrischer Aufbau der Umrichtervorrichtung erzielt.

Eine Umrichtervorrichtung nach Anspruch 2 ermöglicht auf einfache Weise die Bereitstellung einer Ausgangsspannung. Zum Betrieb eines mobilen elektronischen Geräts ist an die Ausgangsanschlüsse ein wiederaufladbarer galvanischer Energiespeicher bzw. eine wiederaufladbare Batterie anschließbar. Parallel zu dem wiederaufladbaren galvanischen Energiespeicher ist ein elektrischer Verbraucher anschließbar, der mittels des galvanischen Energiespeichers und/oder der bereitgestellten Ausgangsspannung betreibbar ist. Das mobile elektronische Gerät ist beispielsweise ein tragbares elektronisches Gerät und/oder ein elektronisches Gerät in einem Fahrzeug. Insbesondere ist der erste Energiespeicher zusätzlich mit einem dritten Ausgangsanschluss und/oder der zweite Energiespeicher mit einem vierten Ausgangsanschluss verbunden. Liegt an den Eingangsanschlüssen eine Spannung mit gleicher Polarität an, so ist bei einer positiven Spannung der wiederaufladbare Energiespeicher an dem ersten und dritten Ausgangsanschluss anschließbar und bei einer negativen Spannung an dem zweiten und vierten Ausgangsanschluss anschließbar. Parallel zu dem wiederaufladbaren galvanischen Energiespeicher ist wiederum ein elektrischer Verbraucher anschließbar.

Eine Umrichtervorrichtung nach Anspruch 3 gewährleistet einen einfachen Aufbau und Betrieb. Durch den Referenzknoten wird in geeigneter Weise ein Referenzpotential bereitgestellt. Vorzugsweise ist der mit den elektronischen Schaltern verbundene Eingangsanschluss mit dem Referenzknoten verbunden. Hierdurch wird eine einfache Ansteuerung der elektronischen Schalter ermöglicht.

Eine Umrichtervorrichtung nach Anspruch 4 gewährleistet eine hohe Zuverlässigkeit und eine hohe Effizienz. Die elektronischen Schaltelemente weisen eine Back-to-back-Anordnung auf, so dass die parasitären Inversdioden entgegengesetzte Sperrrichtungen haben. Durch die Anordnung der Schaltelemente ist somit gewährleistet, dass sowohl bei einer anliegenden negativen Spannung als auch bei einer anliegenden positiven Spannung mindestens eine der Inversdioden sperrt.

Eine Umrichtervorrichtung nach Anspruch 5 gewährleistet eine hohe Zuverlässigkeit und eine hohe Effizienz. Die elektronischen Schaltelemente weisen eine Back-to-back-Anordnung auf, so dass die parasitären Inversdioden entgegengesetzte Sperrrichtungen haben. Durch die Anordnung der Schaltelemente ist somit gewährleistet, dass sowohl bei einer anliegenden negativen Spannung als auch bei einer anliegenden positiven Spannung mindestens eine der Inversdioden sperrt.

Eine Umrichtervorrichtung nach Anspruch 6 gewährleistet eine einfache und effiziente Bereitstellung einer Ausgangsspannung zum Wiederaufladen des galvanischen Energiespeichers. Die Umrichtervorrichtung wird somit als AC/DC-Wandler betrieben.

Eine Umrichtervorrichtung nach Anspruch 7 gewährleistet einen zuverlässigen und effizienten Betrieb. Durch den Glättungskondensator werden Spannungsspitzen der an den Eingangsanschlüssen anliegenden Spannung der Energiegewinnungseinrichtung geglättet. Durch den Glättungskondensator wird zudem die Ermittlung einer Eingangsimpedanz vereinfacht.

Eine Umrichtervorrichtung nach Anspruch 8 gewährleistet einen einfachen, zuverlässigen und effizienten Betrieb bei Anliegen einer positiven Spannung an den Eingangsanschlüssen. Die Steuereinrichtung umfasst vorzugsweise eine Polaritätserkennungseinheit, die das Anliegen einer positiven Spannung an den Eingangsanschlüssen erkennt und ein entsprechendes Polaritätssignal an eine Schalteinheit übermittelt. Die Schalteinheit schaltet die elektronischen Schaltelemente entsprechend der ersten Schaltfolge. Mittels des Tastgrades D (Duty cycle) wird vorzugsweise eine Eingangsimpedanz des Umrichters eingestellt. Der Tastgrad D bezeichnet das Verhältnis der Dauer des ersten Schaltzustands $Z_{1p}$ zu der Gesamtdauer der Schaltzustände $Z_{1p}$ und $Z_{2p}$, also zu der Periodendauer Ts.

Eine Umrichtervorrichtung nach Anspruch 9 gewährleistet einen einfachen, zuverlässigen und effizienten Betrieb bei Anliegen einer negativen Spannung an den Eingangsanschlüssen. Die Steuereinrichtung umfasst vorzugsweise eine Polaritätserkennungseinheit, die das Anliegen einer negativen Spannung an den Eingangsanschlüssen erkennt und ein entsprechendes Polaritätssignal an eine Schalteinheit übermittelt. Die Schalteinheit schaltet die elektronischen Schaltelemente entsprechend der zweiten Schaltfolge. Mittels des Tastgrades D (Duty cycle) wird vorzugsweise eine Eingangsimpedanz des Umrichters eingestellt. Der Tastgrad D bezeichnet das Verhältnis der Dauer des ersten Schaltzustands $Z_{1n}$ zu der Gesamtdauer der Schaltzustände $Z_{1n}$ und $Z_{2n}$, also zu der Periodendauer Ts.

Eine Umrichtervorrichtung nach Anspruch 10 gewährleistet einen einfachen und zuverlässigen Betrieb unabhängig von der Polarität der an den Eingangsanschlüssen anliegenden Spannung der Energiegewinnungseinrichtung. Durch die Polaritätserkennungseinheit erkennt die Umrichtervorrichtung selbst, ob ausschließlich eine positive Spannung oder ausschließlich eine negative Spannung oder wechselnd eine positive Spannung und eine negative Spannung an den Eingangsanschlüssen anliegt. Die Polaritätserkennungseinheit stellt ein entsprechendes Polaritätssignal bereit, so dass der erste elektronische Schalter und der zweite elektronische Schalter entsprechend der aktuell anliegenden Spannung einfach und zuverlässig geschaltet werden können. Vorzugsweise umfasst die Steuereinrichtung eine Schalteinheit, mittels der der erste elektronische Schalter und der zweite elektronische Schalter entsprechend einer in der Steuereinrichtung realisierten ersten Schaltfolge und einer zweiten Schaltfolge angesteuert werden. Die Polaritätserkennungseinheit umfasst vorzugsweise einen Spannungs-Messsensor zur Messung der an den Eingangsanschlüssen anliegenden Spannung und einen Nulldurchgangsdetektor. Das Polaritätssignal ist insbesondere ein digitales Signal. Das Polaritätssignal ist beispielsweise bei einer positiven Spannung gleich Eins und bei einer negativen Spannung gleich Null.

Der Erfindung liegt ferner die Aufgabe zugrunde, einen einfachen, zuverlässigen und effizienten Energieerzeuger zu schaffen.

Diese Aufgabe wird durch einen Energieerzeuger mit den Merkmalen des Anspruchs 12 gelöst. Die Vorteile des erfindungsgemäßen Energieerzeugers entsprechen den bereits beschriebenen Vorteilen der Umrichtervorrichtung. Die Umrichtervorrichtung ist sowohl mittels einer Energiegewinnungseinrichtung, die eine Spannung gleicher Polarität bereitstellt, als auch mittels einer Energiegewinnungseinrichtung, die eine Spannung wechselnder Polarität bereitstellt, betreibbar. Dementsprechend ist die Energiegewinnungseinrichtung beispielsweise ausgewählt aus der Gruppe piezoelektrischer Kristalle und thermoelektrischer Generatoren. Vorzugsweise ist an den Ausgangsanschlüssen der Umrichtervorrichtung ein galvanischer Energiespeicher angeschlossen. Der galvanische Energiespeicher ist wiederaufladbar ausgebildet.

Eine Verwendung der Umrichtervorrichtung nach einem der Ansprüche 1 bis 11, insbesondere des Energieerzeugers nach Anspruch 12, ermöglicht auf einfache Weise eine hohe Flexibilität und universelle Einsetzbarkeit. Die Umrichtervorrichtung ist einerseits mit einer Energiegewinnungseinrichtung zur Bereitstellung einer Spannung gleicher Polarität betreibbar, so dass die Umrichtervorrichtung als DC/DC-Wandler betrieben wird. Andererseits ist die Umrichtervorrichtung mit einer Energiegewinnungseinrichtung zur Bereitstellung einer Spannung wechselnder Polarität betreibbar, so dass die Umrichtervorrichtung als AC/DC-Wandler betrieben wird. Die Umrichtervorrichtung passt sich automatisch an die angeschlossene Energiegewinnungseinrichtung an, so dass die Verwendung der Umrichtervorrichtung einfach und flexibel ist.

Weitere Merkmale, Vorteile und Einzelheiten der Erfindung ergeben sich aus der nachfolgenden Beschreibung mehrerer Ausführungsbeispiele. Es zeigen:

Figur 1     eine schematische Darstellung eines Energieerzeugers gemäß einem ersten Ausführungsbeispiel mit einer Umrichtervorrichtung und einer daran angeschlossenen Energiegewinnungseinrichtung zur Bereitstellung einer Spannung wechselnder Polarität,

Figur 2     einen zeitlichen Verlauf der von der Energiegewinnungseinrichtung bereitgestellten Spannung sowie der von einer Steuereinrichtung erzeugten Schaltimpulse zur Ansteuerung eines Umrichters der Umrichtervorrichtung

Figur 3     eine schematische Darstellung eines ersten Schaltzustandes der Umrichtervorrichtung bei einer bereitgestellten positiven Spannung der Energiegewinnungseinrichtung,

Figur 4     eine schematische Darstellung eines zweiten Schaltzustandes der Umrichtervorrichtung bei einer bereitgestellten positiven Spannung der Energiegewinnungseinrichtung,

Figur 5     eine schematische Darstellung eines ersten Schaltzustandes der Umrichtervorrichtung bei einer bereitgestellten negativen Spannung der Energiegewinnungseinrichtung,

Figur 6     eine schematische Darstellung eines zweiten Schaltzustandes der Umrichtervorrichtung bei einer bereitgestellten negativen Spannung der Energiegewinnungseinrichtung,

Figur 7     eine schematische Darstellung eines ersten Schaltzustands der Umrichtervorrichtung bei Anliegen einer ausschließlich positiven Spannung einer Energiegewinnungseinrichtung zur Bereitstellung einer Spannung gleichbleibender Polarität gemäß einem zweiten Ausführungsbeispiel,

Figur 8     eine schematische Darstellung eines zweiten Schaltzustandes der Umrichtervorrichtung in Figur 7.

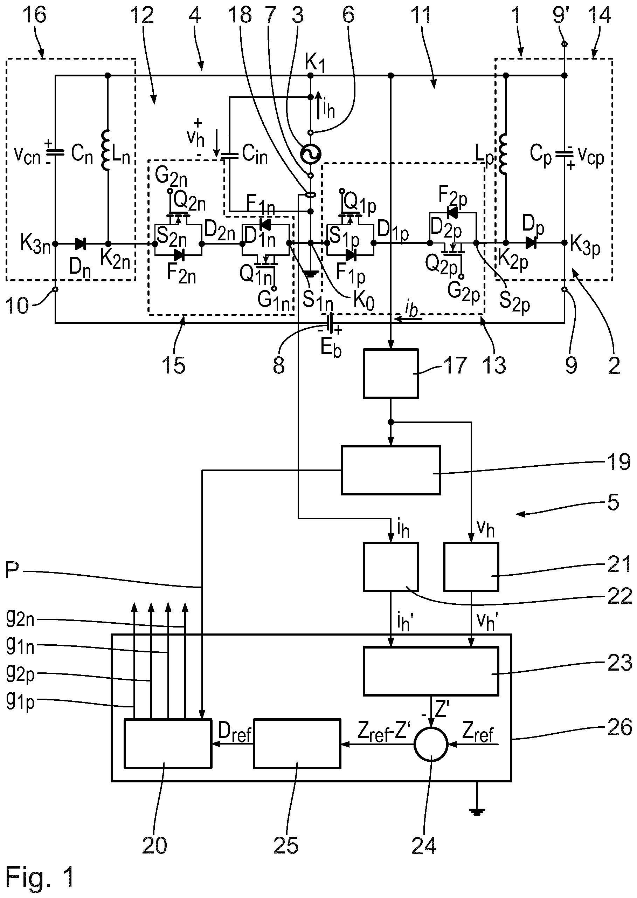

Nachfolgend ist anhand der Figuren 1 bis 6 ein erstes Ausführungsbeispiel der Erfindung beschrieben. Ein Energieerzeuger 1 umfasst eine Umrichtervorrichtung 2 und eine Energiegewinnungseinrichtung 3. Die Umrichtervorrichtung 2 umfasst einen Umrichter 4 und eine zugehörige Steuereinrichtung 5. Die Energiegewinnungseinrichtung 3 ist an einem ersten Eingangsanschluss 6 und an einem zweiten Eingangsanschluss 7 angeschlossen. Der Energieerzeuger 1 dient zum Laden eines wiederaufladbaren galvanischen Energiespeichers 8. Der galvanische Energiespeicher 8 ist an einem ersten Ausgangsanschluss 9 und einem zweiten Ausgangsanschluss 10 des Umrichters 4 angeschlossen. Der Umrichter 4 weist ferner einen dritten Ausgangsanschluss 9' auf, der in dem ersten Ausführungsbeispiel nicht beschaltet ist.

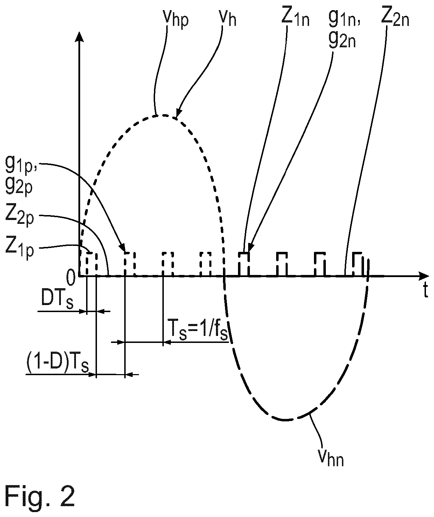

Die Energiegewinnungseinrichtung 3 stellt eine Spannung $v_h$ bereit, die eine wechselnde Polarität hat (AC-Spannung). Die Spannung $v_h$ über der Zeit t ist beispielhaft in Figur 2 dargestellt. Der Teil der Spannung $v_h$ mit positiver Polarität wird nachfolgend mit $v_{hp}$ und der Teil der Spannung mit negativer Polarität wird mit $v_{hn}$ bezeichnet.

Der Umrichter 4 weist zum Glätten der Spannung $v_h$ einen Glättungskondensator $C_{in}$ auf, der parallel zu den Eingangsanschlüssen 6, 7 bzw. der Energiegewinnungseinrichtung 3 geschaltet ist. Der Glättungskondensator $C_{in}$ ist mit einem Knoten $K_1$ und mit einem Referenzknoten $K_0$ verbunden. Der Referenzknoten $K_0$ definiert ein Referenzpotential. Der erste Eingangsanschluss 6 ist mit dem Knoten $K_1$ und der zweite Eingangsanschluss 7 mit dem Referenzknoten $K_0$ verbunden.

Der Umrichter 4 umfasst eine erste Ladeschaltung 11 zum Laden des galvanischen Energiespeichers 8 bei Anliegen der positiven Spannung $v_{hp}$ und eine zweite Ladeschaltung 12 zum Laden des galvanischen Energiespeichers 8 bei Anlegen einer negativen Spannung $v_{hn}$. Die Ladeschaltungen 11, 12 sind an den Knoten $K_1$ und den Referenzknoten $K_0$ angeschlossen und parallel zueinander geschaltet.

Die erste Ladeschaltung 11 umfasst einen ersten elektronischen Schalter 13 und einen in Reihe zu diesem geschalteten ersten elektrischen Energiespeicher 14. Der erste elektronische Schalter 13 ist als eine Reihenschaltung aus einem ersten elektronischen Schaltelement $Q_{1p}$ und einem zweiten elektronischen Schaltelement $Q_{2p}$ ausgebildet. Die elektronischen Schaltelemente $Q_{1p}$ und $Q_{2p}$ sind jeweils als selbstsperrender n-Kanal MOSFET ausgebildet. Ein Source-Anschluss $S_{1p}$ des ersten Schaltelements $Q_{1p}$ ist mit dem Referenzknoten $K_0$ verbunden. Ein Drain-Anschluss

$D_{1p}$ des ersten Schaltelements $Q_{1p}$ ist mit einem Drain-Anschluss $D_{2p}$ des zweiten Schaltelements $Q_{2p}$ verbunden. Ein Source-Anschluss $S_{2p}$ des zweiten Schaltelements $Q_{2p}$ ist mit einem Knoten $K_{2p}$ der ersten Ladeschaltung 11 verbunden.

Eine erste parasitäre Inversdiode $F_{1p}$ ist parallel zu dem ersten Schaltelement $Q_{1p}$ ausgebildet.. Die erste Inversdiode $F_{1p}$ ist derart zu dem Source-Anschluss $S_{1p}$ und dem Drain-Anschluss $D_{1p}$ ausgebildet, dass ein Stromfluss in Richtung des Source-Anschlusses $S_{1p}$ gesperrt wird. Entsprechend ist parallel zu dem zweiten Schaltelement $Q_{2p}$ eine zweite parasitäre Inversdiode $F_{2p}$ ausgebildet. Die zweite Inversdiode $F_{2p}$ ist derart zu dem Source-Anschluss $S_{2p}$ und dem Drain-Anschluss $D_{2p}$ ausgebildet, dass ein Stromfluss in Richtung des Source-Anschlusses $S_{2p}$ gesperrt wird. Die Inversdioden $F_{1p}$ und $F_{2p}$ haben somit entgegengesetzte Sperrrichtungen. Durch die beschriebene Back-to-back-Anordnung der Schaltelemente $Q_{1p}$ und $Q_{2p}$ ist somit gewährleistet, dass sowohl bei einer an dem ersten elektronischen Schalter 13 anliegenden positiven Spannung als auch bei einer negativen Spannung mindestens eine der Inversdioden $F_{1p}$ bzw $F_{2p}$ sperrt. Hierdurch werden parasitäre Ströme und daraus resultierende Verluste vermieden.

Der erste Energiespeicher 14 umfasst eine erste Spule $L_p$, einen ersten Kondensator $C_p$ und ein erstes Sperrelement $D_p$. Die erste Spule $L_p$ ist mit dem Knoten $K_1$ und dem Knoten $K_{2p}$ verbunden. Der erste Kondensator $C_p$ ist mit dem Knoten $K_1$ und einem Knoten $K_{3p}$ verbunden. Das erste Sperrelement $D_p$ ist derart zwischen dem Knoten $K_{2p}$ und dem Knoten $K_{3p}$ angeordnet, dass ein Stromfluss in Richtung des Knotens $K_{2p}$ gesperrt wird. Das erste Sperrelement $D_p$ ist als Diode ausgebildet. Der erste Ausgangsanschluss 9 ist mit dem Knoten $K_{3p}$ verbunden. Der dritte Ausgangsanschluss 9' ist mit dem Knoten $K_1$ verbunden.

Die zweite Ladeschaltung 12 umfasst einen zweiten elektronischen Schalter 15 und einen in Reihe zu diesem geschalteten zweiten elektrischen Energiespeicher 16. Der zweite elektronische Schalter 15 ist als eine Reihenschaltung aus einem dritten elektronischen Schalterelement $Q_{1n}$ und einem vierten elektronischen Schaltelement $Q_{2n}$ ausgebildet. Die elektronischen Schaltelemente $Q_{1n}$ und $Q_{2n}$ sind jeweils als selbstsperrender n-Kanal MOSFET ausgebildet. Ein Source-Anschluss $S_{1n}$ des dritten Schaltelements $Q_{1n}$ ist mit dem Referenzknoten $K_0$ verbunden. Ein Drain-Anschluss $D_{1n}$ des dritten Schaltelements $Q_{1n}$ ist mit einem Drain-Anschluss $D_{2n}$ des vierten Schaltelements $Q_{2n}$ verbunden. Ein Source-Anschluss $S_{2n}$ des vierten Schaltelements $Q_{2n}$ ist mit einem Knoten $K_{2n}$ der zweiten Ladeschaltung 12 verbunden.

Eine dritte parasitäre Inversdiode $F_{1n}$ ist parallel zu dem dritten Schaltelement $Q_{1n}$ ausgebildet. Die dritte Inversdiode $F_{1n}$ ist derart zu dem Source-Anschluss $S_{1n}$ und dem Drain-Anschluss $D_{1n}$ ausgebildet, dass ein Stromfluss in Richtung des Source-Anschlusses $S_{1n}$ gesperrt wird. Entsprechend ist parallel zu dem vierten Schaltelement $Q_{2n}$ eine vierte parasitäre Inversdiode $F_{2n}$ ausgebildet. Die vierte Inversdiode $F_{2n}$ ist derart zu dem Source-Anschluss $S_{2n}$ und dem Drain-Anschluss $D_{2n}$ ausgebildet, dass ein Stromfluss in Richtung des Source-Anschlusses $S_{2n}$ gesperrt wird. Die Inversdioden $F_{1n}$ und $F_{2n}$ haben somit entgegengesetzte Sperrrichtungen. Durch die beschriebene Back-to-back-Anordnung der Schaltelemente $Q_{1n}$ und $Q_{2n}$ ist somit gewährleistet, dass sowohl bei einer an dem zweiten elektronischen Schalter 15 anliegenden positiven Spannung als auch bei einer negativen Spannung mindestens eine der Inversdioden $F_{1n}$ bzw $F_{2n}$ sperrt. Hierdurch werden parasitäre Ströme und daraus resultierende Verluste vermieden.

Der zweite Energiespeicher 16 umfasst eine zweite Spule $L_n$, einen zweiten Kondensator $C_n$ und ein zweites Sperrelement $D_n$. Die zweite Spule $L_n$ ist mit dem Knoten $K_1$ und dem Knoten $K_{2n}$ verbunden. Der zweite Kondensator $C_n$ ist mit dem Knoten $K_1$ und einem Knoten $K_{3n}$ verbunden. Das zweite Sperrelement $D_n$ ist derart zwischen dem Knoten $K_{2n}$ und dem Knoten $K_{3n}$ angeordnet, dass ein Stromfluss in Richtung des Knotens $K_{3n}$ gesperrt wird. Das zweite Sperrelement $D_n$ ist als Diode ausgebildet. Der zweite Ausgangsanschluss 10 ist mit dem Knoten $K_{3n}$ verbunden.

Die Steuereinrichtung 5 dient zum Ansteuern des ersten elektronischen Schalters 13 und des zweiten elektronischen Schalters 15 in Abhängigkeit der Polarität der Spannung $v_h$, also in Abhängigkeit der positiven Spannung $v_{hp}$ und der negativen Spannung $v_{hn}$. Die Steuereinrichtung 5 ist mit dem Referenzpotential verbunden. Die Steuereinrichtung 5 ist derart ausgebildet, dass bei Anliegen der positiven Spannung $v_{hp}$ eine erste Schaltfolge mit einem ersten Schaltzustand $Z_{1p}$ und einem darauf folgenden zweiten Schaltzustand $Z_{2p}$ realisiert wird. Für die erste Schaltfolge gilt:

|          | $Z_{1p}$ | $Z_{2p}$ |
|----------|----------|----------|
| $Q_{1p}$ | 1        | 0        |
| $Q_{2p}$ | 1        | 0        |
| $Q_{1n}$ | 0        | 0        |
| $Q_{2n}$ | 0        | 0        |

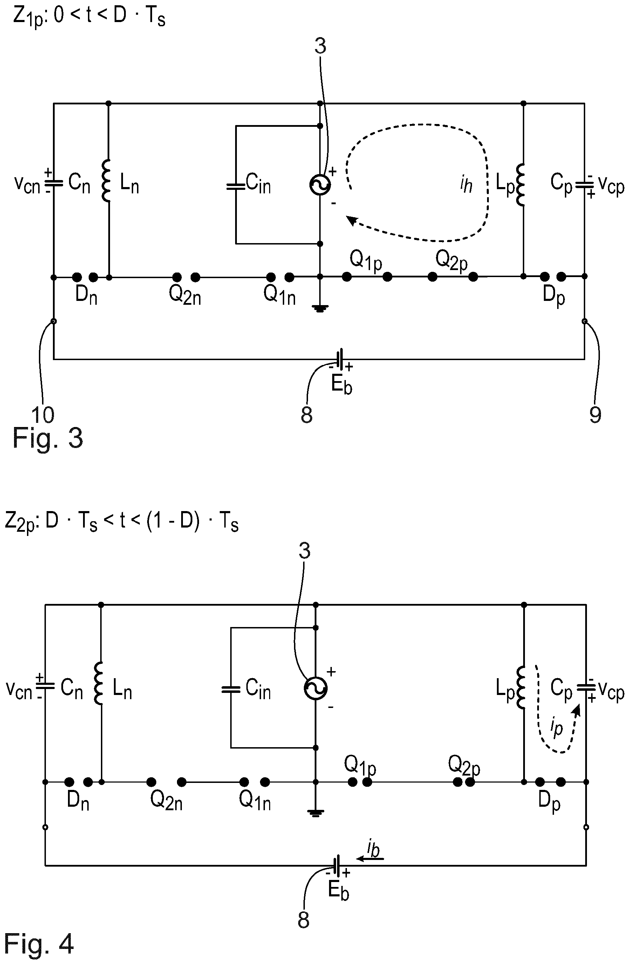

wobei 1 EIN und 0 AUS bedeutet. Der Schaltzustand $Z_{1p}$ ist in Figur 3 und der Schaltzustand $Z_{2p}$ in Figur 4 veranschaulicht.

Die Steuereinrichtung 5 ist ferner derart ausgebildet, dass bei Anliegen der negativen Spannung $v_{hn}$ eine zweite Schaltfolge mit einem ersten Schaltzustand $Z_{1n}$ und einem darauf folgenden zweiten Schaltzustand $Z_{2n}$ realisiert wird. Für die zweite Schaltfolge gilt:

|  | $Z_{1n}$ | $Z_{2n}$ |
|---|---|---|
| $Q_{1p}$ | 0 | 0 |
| $Q_{2p}$ | 0 | 0 |
| $Q_{1n}$ | 1 | 0 |
| $Q_{2n}$ | 1 | 0 |

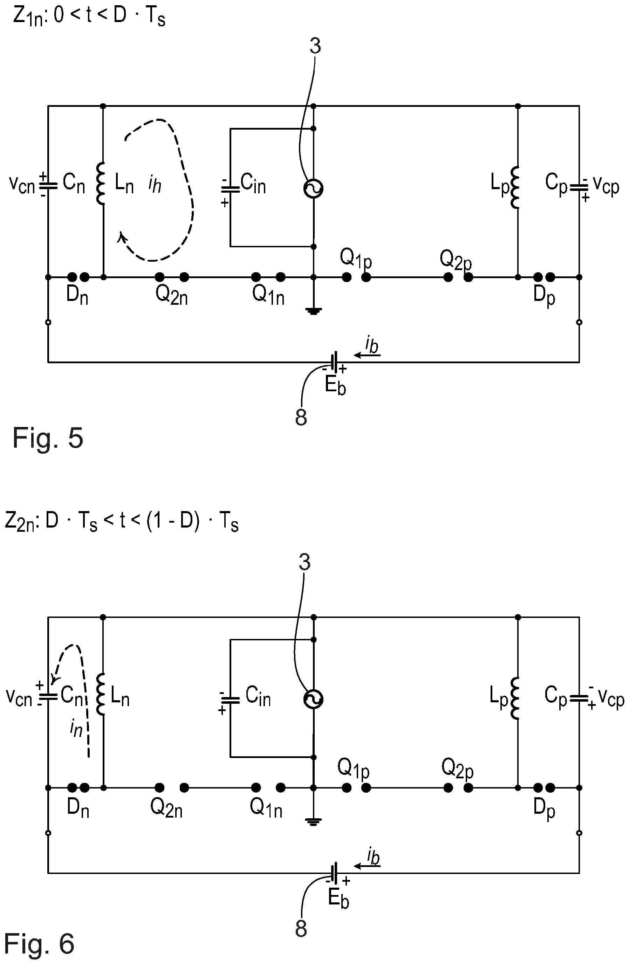

wobei 1 EIN und 0 AUS bedeutet. Der Schaltzustand $Z_{1n}$ ist in Figur 5 und der Schaltzustand $Z_{2n}$ in Figur 6 veranschaulicht.

Die erste Schaltfolge und die zweite Schaltfolge erstrecken sich jeweils über eine Periodendauer Ts. Für die Periodendauer Ts gilt: Ts = 1/fs, wobei fs eine konstante Schaltfrequenz der Steuereinrichtung 5 bezeichnet. Der jeweilige erste Schaltzustand $Z_{1p}$ bzw. $Z_{1n}$ hat die Zeitdauer $D \cdot T_S$ und der jeweils zugehörige zweite Schaltzustand $Z_{2p}$ bzw. $Z_{2n}$ die Zeitdauer $(1-D) \cdot T_S$, wobei D einen Tastgrad bzw. Ansteuergrad (Duty cycle) bezeichnet.

Die Steuereinrichtung 5 umfasst einen Spannungs-Messsensor 17 zur Messung der Spannung $v_h$ und einen Strom-Messsensor 18 zur Messung eines Stroms $i_h$. Der Strom $i_h$ fließt zwischen der Energiegewinnungseinrichtung 3 und dem Umrichter 4.

Die Steuereinrichtung 5 umfasst eine Polaritätserkennungseinheit 19, der die gemessene Spannung $v_h$ bereitgestellt wird. In der Polaritätserkennungseinheit 19 wird erkannt, ob die Spannung $v_h$ positiv oder negativ ist. Hierzu ist die Polaritätserkennungseinheit 19 beispielsweise als Nulldurchgangserkennungseinheit ausgebildet (zero cross detection). Die Polaritätserkennungseinheit 19 stellt ein entsprechendes digitales Polaritätssignal P bereit. Die Polaritätserkennungseinheit 19 erkennt somit die positive Spannung $v_{hp}$ und die negative Spannung $v_{hn}$. Das Polaritätssignal P wird einer Schalteinheit 20 der Steuereinrichtung 5 zugeführt. Die Schalteinheit 20 erzeugt Steuerspannungen $g_{1p}$, $g_{2p}$, $g_{1n}$ und $g_{2n}$ zur Ansteuerung der Schaltelemente $Q_{1p}$, $Q_{2p}$, $Q_{1n}$ und $Q_{2n}$. Die Steuerspannungen $g_{1p}$, $g_{2p}$, $g_{1n}$ und $g_{2n}$ liegen an Gate-Anschlüssen $G_{1p}$, $G_{2p}$, $G_{1n}$ und $G_{2n}$ der Schaltelemente $Q_{1p}$, $Q_{2p}$, $Q_{1n}$ und $Q_{2n}$ an.

Die Steuereinrichtung 5 umfasst einen ersten Analog-Digital-Wandler 21, der die gemessene Spannung $v_h$ in eine digitale Spannung $v_h'$ umwandelt. Weiterhin weist die Steuereinrichtung 5 einen zweiten Analog-Digital-Wandler 22 auf, der den gemessenen Strom $i_h$ in einen digitales Strom $i_h'$ umwandelt.

Zur Berechnung einer Eingangsimpedanz weist die Steuereinrichtung 5 eine Impedanzermittlungseinheit 23 auf, die aus der digitalen Spannung $v_h'$ und dem digitalen Strom $i_h'$ eine Eingangsimpedanz Z' ermittelt. Die Eingangsimpedanz Z' ist ein Rechenwert bzw. Schätzwert für die aus Sicht der Eingangsanschlüsse 6, 7 vorliegende Eingangsimpedanz Z des Umrichters 4 und des daran angeschlossenen galvanischen Energiespeichers 8. Die Steuereinrichtung 5 umfasst einen Subtrahierer 24, der aus einer Soll-Eingangsimpedanz Zref und der ermittelten Eingangsimpedanz Z' eine Differenz $Z_{ref} - Z'$ bildet. Die Differenz wird einem Impedanzregler 25 zugeführt, der ausgangsseitig einen Soll-Tastgrad $D_{ref}$ bereitstellt. Der Impedanzregler ist beispielsweise als PID-Regler ausgebildet. Der Soll-Tastgrad $D_{ref}$ wird der Schalteinheit 20 zugeführt, die die Steuerspannungen $g_{1p}$, $g_{2p}$, $g_{1n}$ und $g_{2n}$ in Abhängigkeit des Polaritätssignals P und des Soll-Tastgrades $D_{ref}$ generiert. Hierzu ist die Schalteinheit 20 beispielsweise als digitaler Pulsweitenmodulator ausgebildet.

Die Schalteinheit 20, die Impedanzerkennungseinheit 23, der Subtrahierer 24 und der Impedanzregler 25 bilden eine Regeleinheit 26, die Teil eines Impedanzregelkreises ist. Mittels des Impedanzregelkreises wird die Eingangsimpedanz Z derart eingestellt, dass diese rein ohmsch wird und die Spannung vh und der Strom ih im Wesentlichen in Phase sind. Die Einstellung der Eingangsimpedanz Z erfolgt mittels des Tastgrades D. Im diskontinuierlichen Leitungsmodus (discontinious conduction mode) gilt für die Eingangsimpedanz:

$$Z = \frac{2 \cdot f_S \cdot L}{D^2},$$

wobei $L = L_p$ oder $L = L_n$ ist. Die Soll-Eingangsimpedanz Zref wird beispielsweise empirisch in Versuchen ermittelt. Die Soll-Eingangsimpedanz $Z_{ref}$ ist insbesondere ein Widerstandswert, bei dem eine hohe Effizienz, vorzugsweise eine maximale Effizienz bei der Energiegewinnung erzielt wird.

Die Funktion des Energieerzeugers 1 ist wie folgt:

Die Energiegewinnungseinrichtung 3 erzeugt die Spannung $v_h$ und den Strom $i_h$. Mittels der gemessenen Spannung $v_h$ erkennt die Polaritätserkennungseinheit 19, ob die positive Spannung $v_{hp}$ oder die negative Spannung $v_{hn}$ an den Eingangsanschlüssen 6, 7 anliegt und stellt ein entsprechendes Polaritätssignal P bereit. Beispielsweise ist das Polaritätssignal P Eins, wenn die positive Spannung $v_{hp}$ anliegt und Null, wenn die negative Spannung $v_{hn}$ anliegt.

Liegt die positive Spannung $v_{hp}$ an, so realisiert die Steuereinrichtung 5 die erste Schaltfolge. Zunächst werden in dem ersten Schaltzustand $Z_{1p}$ die Schaltelemente $Q_{1p}$ und $Q_{2p}$ eingeschaltet, so dass der Strom $i_h$ durch die erste Spule $L_p$ fließt. Das erste Sperrelement $D_p$ unterbindet ein Fließen des Stroms $i_h$ über den ersten Kondensator $C_p$. In dem ersten Schaltzustand $Z_{1p}$ sind die Schaltelemente $Q_{1n}$ und $Q_{2n}$ geöffnet. Dies ist in Figur 3 veranschaulicht.

In dem darauf folgenden zweiten Schaltzustand $Z_{2p}$ wird von der ersten Spule $L_p$ ein Strom $i_p$ über das erste Sperrelement $D_p$ getrieben, so dass der erste Kondensator $C_p$ geladen wird. An dem ersten Kondensator $C_p$ liegt die Spannung $v_{cp}$ an. Aufgrund der Spannung $v_{cp}$ fließt ein Strom $i_b$, der den galvanischen Energiespeicher 8 lädt. In dem zweiten Schaltzustand $Z_{2p}$ sind die Schaltelemente $Q_{1n}$ und $Q_{2n}$ weiterhin geöffnet. Dies ist in Figur 4 veranschaulicht.

Liegt die negative Spannung $v_{hn}$ an, so realisiert die Steuereinrichtung 5 die zweite Schaltfolge. Zunächst werden in dem ersten Schaltzustand $Z_{1n}$ die Schaltelemente $Q_{1n}$ und $Q_{2n}$ eingeschaltet, so dass der Strom $i_h$ durch die zweite Spule $L_n$ fließt. Das zweite Sperrelement $D_n$ unterbindet ein Fließen des Stroms $i_h$ über den zweiten Kondensator $C_n$. In dem ersten Schaltzustand $Z_{1n}$ sind die Schaltelemente $Q_{1p}$ und $Q_{2p}$ geöffnet. Dies ist in Figur 5 veranschaulicht.

In dem darauf folgenden zweiten Schaltzustand $Z_{2n}$ wird von der zweiten Spule $L_n$ ein Strom $i_n$ über das zweite Sperrelement $D_n$ getrieben, so dass der zweite Kondensator $C_n$ geladen wird. An dem zweiten Kondensator $C_n$ liegt die Spannung $v_{cn}$ an. Aufgrund der Spannung $v_{cn}$ fließt ein Strom $i_b$, der den galvanischen Energiespeicher 8 lädt. In dem zweiten Schaltzustand $Z_{2n}$ sind die Schaltelemente $Q_{1p}$ und $Q_{2p}$ weiterhin geöffnet. Dies ist in Figur 6 veranschaulicht.

Mittels den Spannungen $v_{cp}$ und $v_{cn}$ wird der galvanische Energiespeicher 8 geladen, der die Spannung $E_b$ bereitstellt.

In der ersten Schaltfolge und der zweiten Schaltfolge wird die Eingangsimpedanz Z geregelt. Hierzu wird aus der digitalen Spannung $v_h$' und dem digitalen Strom $i_h$' mittels der Impedanzerkennungseinheit 23 die Eingangsimpedanz Z' errechnet. Der Subtrahierer 24 erzeugt die Differenz aus der Soll-Eingangsimpedanz Zref und der ermittelten Eingangsimpedanz Z'. Diese Differenz wird dem Impedanzregler 25 zugeführt, der der Schalteinheit 20 als Stellgröße den Soll-Tastgrad $D_{ref}$ bereitstellt. Die Schalteinheit 20 stellt die Schaltsignale bzw. die Steuerspannungen gip, $g_{2p}$, gin und $g_{2n}$ in zeitlicher Hinsicht so ein, dass der jeweilige erste Schaltzustand $Z_{1p}$ bzw. $Z_{1n}$ bezogen auf eine Periodendauer Ts für die Zeitdauer $0 < T \leq D \cdot T_S$ eingestellt wird und der jeweils zweite Schaltzustand $Z_{2p}$ bzw. $Z_{2n}$ für die Zeitdauer $D \cdot Ts < T < (1 - D) \cdot T_S$ eingestellt wird.

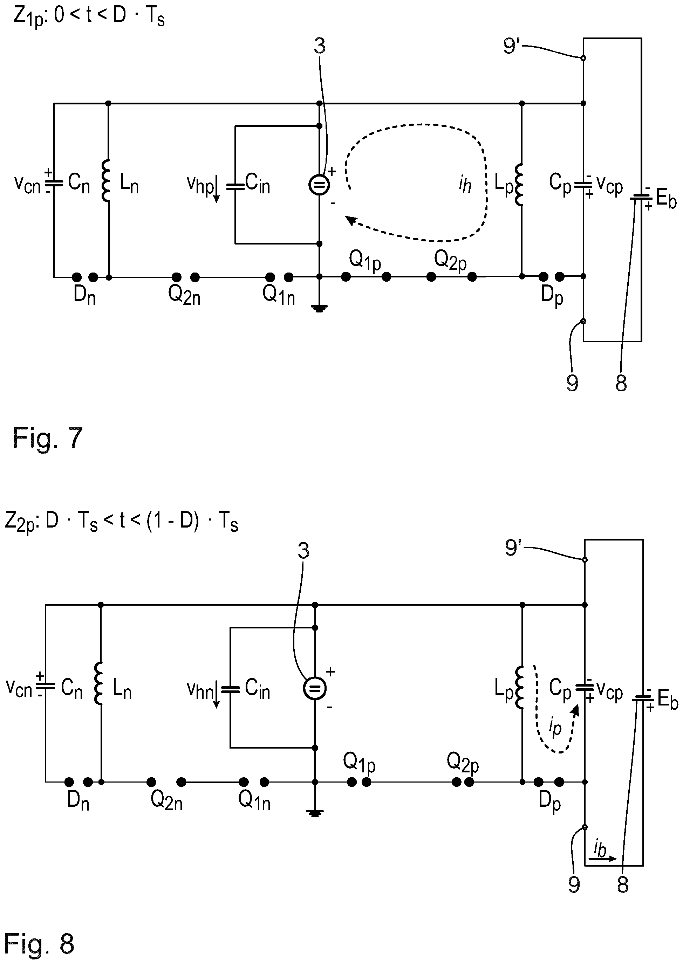

Nachfolgend ist anhand der Figuren 7 und 8 ein zweites Ausführungsbeispiel der Erfindung beschrieben. Im Unterschied zu dem ersten Ausführungsbeispiel weist der Energieerzeuger 1 eine Energiegewinnungseinrichtung 3 auf, die ausschließlich eine positive Spannung $v_{hp}$ bereitstellt. Der galvanische Energiespeicher 8 ist an dem ersten Ausgangsanschluss 9 und dem dritten Ausgangsanschluss 9' des Umrichters 4 angeschlossen. Der zweite Ausgangsanschluss 10 ist in dem zweiten Ausführungsbeispiel nicht beschaltet. Die Steuereinrichtung 5 realisiert ausschließlich die erste Schaltfolge. Der erste Schaltzustand $Z_{1p}$ ist in Figur 7 und der zweite Schaltzustand $Z_{2p}$ in Figur 8 veranschaulicht. Hinsichtlich des weiteren Aufbaus und der weiteren Funktionsweise wird auf die Beschreibung des vorangegangenen Ausführungsbeispiels verwiesen.

Die erfindungsgemäße Umrichtervorrichtung 2 ist wahlweise mit einer Energiegewinnungseinrichtung 3 betreibbar, die entweder eine Spannung $v_h$ mit wechselnder Polarität oder ausschließlich eine positive Spannung $v_{hp}$ oder ausschließlich eine negative Spannung $v_{hn}$ bereitstellt. Stellt die Energiegewinnungseinrichtung 3 die Spannung $v_h$ mit wechselnder Polarität bereit, so arbeitet die Umrichtervorrichtung 2 als AC/DC-Wandler. Dies ist in den Figuren 1 bis 6 veranschaulicht. Stellt die Energiegewinnungseinrichtung 3 demgegenüber ausschließlich eine positive Spannung $v_{hp}$ oder ausschließlich eine negative Spannung $v_{hn}$ bereit, so arbeitet die Umrichtervorrichtung 2 als DC/DC-Wandler. Für die positive Spannung $v_{hp}$ ist dies in den Figuren 7 und 8 veranschaulicht. Für die negative Spannung $v_{hn}$ arbeitet die Umrichtervorrichtung 2 entsprechend den Figuren 5 und 6. Die erfindungsgemäße Umrichtervorrichtung 2 basiert auf einem Tief-Hochsetzsteller. Die Umrichtervorrichtung 2 kann sowohl mit einer Gleichspannung (DC-Spannung) als auch mit einer Wechselspannung (AC-Spannung) betrieben werden. Die Umrichtervorrichtung 2 eignet sich für batteriebetriebene Geräte, die mittels einer Energiegewinnungseinrichtung 3 kleine Mengen von elektrischer Energie gewinnen. Zur Optimierung der Energiegewinnung ermöglicht die Umrichtervorrichtung 2 eine Einstellung der Eingangsimpedanz Z derart, dass diese rein ohmsch ist. Die AC/DC-Umwandlung erfolgt in einer Stufe ohne die Verwendung eines Brückengleichrichters. Hierdurch wird ein Spannungsabfall und Energieverluste vermieden, so dass die Umrichtervorrichtung 2 auch für sehr niedrige Spannungen $v_h$ der Energiegewinnungseinrichtung 3 geeignet ist. Der Umrichter 4 weist zwei elektronische Schaltelemente $Q_{1p}$, $Q_{2p}$ und $Q_{1n}$, $Q_{2n}$ pro Phase auf, so dass eine direkte Umwandlung einer AC-Spannung in eine DC-Spannung möglich ist und bei der Umwandlung einer DC-Spannung in eine DC-Spannung nur eine Phase erforderlich ist. Zur Einstellung der Eingangsimpedanz Z wird die Umrichtervorrichtung 2 im diskontinuierlichen Leitungsmodus betrieben, so dass der Umrichter 4 für die Energiegewinnungseinrichtung 3 als rein ohmscher Widerstand erscheint. Der Glättungskondensator $C_{in}$ vereinfacht die Ermittlung der Eingangsimpedanz Z.

Da die Source-Anschlüsse $S_{1p}$ und $S_{1n}$ das gleiche Referenzpotential haben, kann für die Schaltelemente $Q_{1p}$ und $Q_{1n}$ jeweils ein einfacher Low-Side-Gate-Driver verwendet werden. Für die Schaltelemente $Q_{2p}$ und $Q_{2n}$ wird jeweils ein Floating-Gate-Driver verwendet. Die Spannungsmessung, Strommessung und die Polaritätserkennung sind einfach, da der Spannungs-Messsensor 17, der Strom-Messsensor 18 und die Polaritätserkennungseinheit 19 dasselbe Referenzpotential verwenden. Die Umrichtervorrichtung 2 kann beispielsweise zusammen mit einem galvanischen Energiespeicher 8 betrieben werden, der eine Spannung von 3,7 V, 7,4 V oder 12 V ermöglicht. Hierdurch kann die Umrichtervorrichtung 2 für tragbare elektronische Geräte sowie für Fahrzeuge verwendet werden.

**Patentansprüche**

1. Umrichtervorrichtung zur Energiegewinnung umfassend

   - einen Umrichter (4) mit

      -- einem ersten Eingangsanschluss (6) und einem zweiten Eingangsanschluss (7) zum Verbinden mit einer Energiegewinnungseinrichtung (3),
      -- einem ersten Ausgangsanschluss (9) und einem zweiten Ausgangsanschluss (10) zum Verbinden mit einem galvanischen Energiespeicher (8),
      -- einer ersten Ladeschaltung (11) zum Laden des galvanischen Energiespeichers (8) mit einer an den Eingangsanschlüssen (6, 7) anliegenden positiven Spannung ($v_{hp}$) der Energiegewinnungseinrichtung (3) mit

         --- einem ersten elektronischen Schalter (13), wobei der erste elektronische Schalter (13) eine Reihenschaltung aus einem ersten elektronischen Schaltelement ($Q_{1p}$) und einem zweiten elektronischen Schaltelement ($Q_{2p}$) umfasst, und
         --- einem ersten elektrischen Energiespeicher (14),

            wobei der erste Energiespeicher (14) eine erste Spule ($L_p$), einen ersten Kondensator ($C_p$) und ein erstes Sperrelement ($D_p$) umfasst,
            wobei der erste elektrische Energiespeicher (14) in Reihe zu dem ersten elektronischen Schalter (13) geschaltet ist,

      -- einer zweiten Ladeschaltung (12) zum Laden des galvanischen Energiespeichers (8) mit einer an den Eingangsanschlüssen (6, 7) anliegenden negativen Spannung ($v_{hn}$) der Energiegewinnungseinrichtung (3),

   **dadurch gekennzeichnet,**
   **dass** die zweite Ladeschaltung (12)
   - einen zweiten elektronischen Schalter (15) umfasst, wobei der zweite elektronische Schalter (15) eine Reihenschaltung aus einem dritten elektronischen Schaltelement ($Q_{1n}$) und einem vierten elektronischen Schaltelement ($Q_{2n}$) umfasst, und
   - einen zweiten elektrischen Energiespeicher (16) umfasst, wobei der zweite Energiespeicher (16) eine zweite Spule ($L_n$), einen zweiten Kondensator ($C_n$) und ein zweites Sperrelement ($D_n$) umfasst,
   wobei der zweite elektrische Energiespeicher (16) in Reihe zu dem zweiten elektronischen Schalter (15) geschaltet ist,
   **dass** die erste Ladeschaltung (11) und die zweite Ladeschaltung (12) parallel zueinander geschaltet sind,
   **dass** die Umrichtervorrichtung (2) eine Steuereinrichtung (5) zum Ansteuern des ersten elektronischen Schalters (13) und des zweiten elektronischen Schalters (15) in Abhängigkeit einer Polarität der an den Eingangsanschlüssen (6, 7) anliegenden Spannung ($v_h$) der Energiegewinnungseinrichtung (3) umfasst,
   **dass** die Steuereinrichtung (5) einen Impedanzregler (25) zur Einstellung einer Eingangsimpedanz (Z) umfasst, der eingerichtet ist, in Abhängigkeit
   einer ermittelten Eingangsimpedanz (Z') und einer Soll-Eingangsimpedanz ($Z_{ref}$) die Ansteuerung der elektronischen Schalter (13, 15) zu verändern, und **dass** die Steuereinrichtung (5) einen Spannungs-Messsensor (17) und einen Strom-Messsensor (18) umfasst, wobei der Spannungs-Messsensor eingerichtet ist, die an den Eingangsanschlüssen (6, 7) anliegende Spannung ($v_h$) zu messen, wobei der Strom-Messsensor (18) eingerichtet ist, einen von der Energiegewinnungseinrichtung (3) zu dem Umrichter (4) fließenden Strom ($i_h$) zu messen, und wobei die Steuereinrichtung (5) eingerichtet ist, aus der gemessenen Spannung und dem gemessenen Strom die Eingangsimpedanz zu ermitteln.

2. Umrichtervorrichtung nach Anspruch 1, **dadurch gekennzeichnet, dass** der erste Energiespeicher (14) mit dem ersten Ausgangsanschluss (9) und der zweite Energiespeicher (16) mit dem zweiten Ausgangsanschluss (10) verbunden ist.

EP 3 334 027 B1

3. Umrichtervorrichtung nach einem der Ansprüche 1 oder 2, **dadurch gekennzeichnet,**
**dass** einer der Eingangsanschlüsse (7) mit einem Referenzknoten ($K_0$) verbunden ist.

4. Umrichtervorrichtung nach einem der Ansprüche 1 bis 3, **dadurch gekennzeichnet,**
**dass** eine parallel zu dem ersten elektronischen Schaltelement ($Q_{1p}$) ausgebildete erste Inversdiode ($F_{1p}$) und eine parallel zu dem zweiten elektronischen Schaltelement ($Q_{2p}$) ausgebildete zweite Inversdiode ($F_{2p}$) entgegengesetzte Sperrrichtungen haben.

5. Umrichtervorrichtung nach einem der Ansprüche 1 bis 4, **dadurch gekennzeichnet,**
**dass** eine parallel zu dem dritten elektronischen Schaltelement ($Q_{1n}$) ausgebildete dritte Inversdiode ($F_{1n}$) und eine parallel zu dem vierten elektronischen Schaltelement ($Q_{2n}$) ausgebildete vierte Inversdiode ($F_{2n}$) entgegengesetzte Sperrrichtungen haben.

6. Umrichtervorrichtung nach einem der Ansprüche 1 bis 5, **dadurch gekennzeichnet,**
**dass** der erste Kondensator ($C_p$) und der zweite Kondensator ($C_n$) mit jeweils einem der Ausgangsanschlüsse (9, 10) verbunden ist.

7. Umrichtervorrichtung nach einem der Ansprüche 1 bis 6, **dadurch gekennzeichnet,**
**dass** parallel zu den Eingangsanschlüssen (6, 7) ein Glättungskondensator ($C_{in}$) geschaltet ist.

8. Umrichtervorrichtung nach einem der Ansprüche 1 bis 7, **dadurch gekennzeichnet,**

**dass** die Steuereinrichtung (5) eine erste Schaltfolge bei Anliegen einer positiven Spannung ($v_{hp}$) an den Eingangsanschlüssen (6, 7) umfasst, wobei für die erste Schaltfolge gilt:

|          | $Z_{1p}$ | $Z_{2p}$ |
|----------|----------|----------|
| $Q_{1p}$ | 1        | 0        |
| $Q_{2p}$ | 1        | 0        |
| $Q_{1n}$ | 0        | 0        |
| $Q_{2n}$ | 0        | 0        |

wobei
$Q_{1p}$ und $Q_{2p}$ zwei in Reihe geschaltete elektronische Schaltelemente des ersten elektronischen Schalters (13) bezeichnet,
$Q_{1n}$ und $Q_{2n}$ zwei in Reihe geschaltete elektronische Schaltelemente des zweiten elektronischen Schalters (15) bezeichnet,
$Z_{1p}$ und $Z_{2p}$ zwei aufeinanderfolgende Schaltzustände der ersten Schaltfolge bezeichnet, und
1 EIN und 0 AUS bedeutet.

9. Umrichtervorrichtung nach einem der Ansprüche 1 bis 8, **dadurch gekennzeichnet,**

**dass** die Steuereinrichtung (5) eine zweite Schaltfolge bei Anliegen einer negativen Spannung ($v_{hn}$) an den Eingangsanschlüssen (6, 7) umfasst, wobei für die zweite Schaltfolge gilt:

|          | $Z_{1n}$ | $Z_{2n}$ |
|----------|----------|----------|
| $Q_{1p}$ | 0        | 0        |
| $Q_{2p}$ | 0        | 0        |
| $Q_{1n}$ | 1        | 0        |
| $Q_{2n}$ | 1        | 0        |

wobei
$Q_{1p}$ und $Q_{2p}$ zwei in Reihe geschaltete elektronische Schaltelemente des ersten elektronischen Schalters (13)

11

bezeichnet,
$Q_{1n}$ und $Q_{2n}$ zwei in Reihe geschaltete elektronische Schaltelemente des zweiten elektronischen Schalters (15) bezeichnet,
$Z_{1n}$ und $Z_{2n}$ zwei aufeinanderfolgende Schaltzustände der zweiten Schaltfolge bezeichnet, und
1 EIN und 0 AUS bedeutet.

10. Umrichtervorrichtung nach einem der Ansprüche 1 bis 9, **dadurch gekennzeichnet,**
**dass** die Steuereinrichtung (5) eine Polaritätserkennungseinheit (19) zur Erkennung einer positiven Spannung ($v_{hp}$) und einer negativen Spannung ($v_{hn}$) der Energiegewinnungseinrichtung (3) umfasst.

11. Energieerzeuger mit
einer Umrichtervorrichtung (2) nach einem der Ansprüche 1 bis 10 und einer an den Eingangsanschlüssen (6, 7) angeschlossenen Energiegewinnungseinrichtung (3) zur Bereitstellung einer Spannung ($V_h$).

12. Verwendung einer Umrichtervorrichtung (2) nach einem der Ansprüche 1 bis 10 wahlweise mit einer Energiegewinnungseinrichtung (3) zur Bereitstellung einer Spannung ($v_{hp}$, $v_{hn}$) gleicher Polarität oder einer Spannung ($v_h$) wechselnder Polarität.

**Claims**

1. Converter apparatus for energy harvesting, comprising

    - a converter (4) having

        -- a first input connection (6) and a second input connection (7) for connection to an energy harvesting device (3),
        -- a first output connection (9) and a second output connection (10) for connection to a galvanic energy store (8),
        -- a first charging circuit (11) for charging the galvanic energy store (8) with a positive voltage ($v_{hp}$) of the energy harvesting device (3) that is applied to the input connections (6, 7), having

            --- a first electronic switch (13), wherein the first electronic switch (13) comprises a series circuit containing a first electronic switching element ($Q_{1p}$) and a second electronic switching element ($Q_{2p}$), and
            --- a first electrical energy store (14), wherein the first energy store (14) comprises a first coil ($L_p$), a first capacitor ($C_p$) and a first blocking element ($D_p$),

        wherein the first electrical energy store (14) is connected in series with the first electronic switch (13),
        -- a second charging circuit (12) for charging the galvanic energy store (8) with a negative voltage ($v_{hn}$) of the energy harvesting device (3) that is applied to the input connections (6, 7),
        **characterised in**
        **that** the second charging circuit (12)

            - comprises a second electronic switch (15), wherein the second electronic switch (15) comprises a series circuit containing a third electronic switching element ($Q_{1n}$) and a fourth electronic switching element ($Q_{2n}$), and
            - comprises a second electrical energy store (16), wherein the second energy store (16) comprises a second coil ($L_n$), a second capacitor ($C_n$) and a second blocking element ($D_n$),

        wherein the second electrical energy store (16) is connected in series with the second electronic switch (15),
        **that** the first charging circuit (11) and the second charging circuit (12) are connected in parallel with one another,
        **that** the converter apparatus (2) comprises a control device (5) for actuating the first electronic switch (13) and the second electronic switch (15) on the basis of a polarity of the voltage ($v_h$) of the energy harvesting device (3) that is applied to the input connections (6, 7),
        **that** the control device (5) comprises an impedance regulator (25) for setting an input impedance (Z), which impedance regulator is set up to alter the activation of the electronic switches (13, 15) on the basis of an ascertained input impedance (Z') and a setpoint input impedance ($Z_{ref}$), and

**that** the control device (5) comprises a voltage measurement sensor (17) and a current measurement sensor (18), wherein the voltage measurement sensor is arranged to measure the voltage ($v_h$) applied to the input connections (6, 7), wherein the current measurement sensor (18) is arranged to measure a current (i) flowing from the energy harvesting device (3) to the converter (4), and wherein the control device (5) is arranged to determine the input impedance from the measured voltage and the measured current.

2. Converter apparatus according to claim 1, **characterised in that** the first energy store (14) is connected to the first output connection (9) and the second energy store (16) is connected to the second output connection (10).

3. Converter apparatus according to one of claims 1 or 2, **characterised in that** one of the input connections (7) is connected to a reference node ($K_0$).

4. Converter apparatus according to one of claims 1 to 3, **characterised in that** a first inverse diode ($F_{1p}$) configured in parallel with the first electronic switching element ($Q_{1p}$) and a second inverse diode ($F_{2p}$) configured in parallel with the second electronic switching element ($Q_{2p}$) have opposite reverse directions.

5. Converter apparatus according to one of claims 1 to 4, **characterised in that** a third inverse diode ($F_{1n}$) configured in parallel with the third electronic switching element ($Q_{1n}$) and a fourth inverse diode ($F_{2n}$) configured in parallel with the fourth electronic switching element ($Q_{2n}$) have opposite reverse directions.

6. Converter apparatus according to one of claims 1 to 5, **characterised in that** the first capacitor ($C_p$) and the second capacitor ($C_n$) are connected to a respective one of the output connections (9, 10).

7. Converter apparatus according to one of claims 1 to 6, **characterised in that** a smoothing capacitor ($C_{in}$) is connected in parallel with the input connections (6, 7).

8. Converter apparatus according to one of claims 1 to 7, **characterised in that** the control device (5) comprises a first switching sequence when a positive voltage ($v_{hp}$) is applied to the input connections (6, 7), wherein it holds for the first switching sequence that:

|          | $Z_{1p}$ | $Z_{2p}$ |
|----------|----------|----------|
| $Q_{1p}$ | 1        | 0        |
| $Q_{2p}$ | 1        | 0        |
| $Q_{1n}$ | 0        | 0        |
| $Q_{2n}$ | 0        | 0        |

where

$Q_{1p}$ and $Q_{2p}$ denote two series-connected electronic switching elements of the first electronic switch (13),
$Q_{1n}$ and $Q_{2n}$ denote two series-connected electronic switching elements of the second electronic switch (15),
$Z_{1p}$ and $Z_{2p}$ denote two successive switching states of the first switching sequence, and
1 means ON and 0 means OFF.

9. Converter apparatus according to one of claims 1 to 8, **characterised in that** the control device (5) comprises a second switching sequence when a negative voltage ($v_{hn}$) is applied to the input connections (6, 7), wherein it holds for the second switching sequence that:

|          | $Z_{1n}$ | $Z_{2n}$ |
|----------|----------|----------|
| $Q_{1p}$ | 0        | 0        |
| $Q_{2p}$ | 0        | 0        |
| $Q_{1n}$ | 1        | 0        |
| $Q_{2n}$ | 1        | 0        |

where

Q$_{1p}$ and Q$_{2p}$ denote two series-connected electronic switching elements of the first electronic switch (13),
Q$_{1n}$ and Q$_{2n}$ denote two series-connected electronic switching elements of the second electronic switch (15),
Z$_{1n}$ and Z$_{2n}$ denote two successive switching states of the second switching sequence, and
1 means ON and 0 means OFF.

10. Converter apparatus according to one of claims 1 to 9, **characterised in that** the control device (5) comprises a polarity detection unit (19) for detecting a positive voltage (v$_{hp}$) and a negative voltage (v$_{hn}$) of the energy harvesting device (3).

11. Energy generator having

a converter apparatus (2) according to one of claims 1 to 10 and
an energy harvesting device (3), connected to the input connections (6, 7) for providing a voltage (V$_h$).

12. Use of a converter apparatus (2) according to one of claims 1 to 10 selectively with an energy harvesting device (3) for providing a voltage (v$_{hp}$, v$_{hn}$) of the same polarity or a voltage (v$_h$) of alternating polarity.

**Revendications**

1. Dispositif convertisseur pour la récupération d'énergie comprenant

- un convertisseur (4) ayant

-- une première borne d'entrée (6) et une deuxième borne d'entrée (7) destinées à être connectées à un dispositif de récupération d'énergie (3),
-- une première borne de sortie (9) et une deuxième borne de sortie (10) destinées à être connectées à un accumulateur d'énergie galvanique (8),
-- un premier circuit de charge (11) pour charger l'accumulateur d'énergie galvanique (8) avec une tension positive (v$_{hp}$) appliquée aux bornes d'entrée (6, 7) du dispositif de récupération d'énergie (3) ayant

--- un premier commutateur électronique (13), le premier commutateur électronique (13) comprenant un montage en série d'un premier élément de commutation électronique (Q$_{1p}$) et d'un deuxième élément de commutation électronique (Q$_{2p}$), et
--- un premier accumulateur d'énergie électrique (14), le premier accumulateur d'énergie (14) comprenant une première bobine (L$_p$), un premier condensateur (C$_p$) et un premier élément de blocage (D$_p$), dans lequel le premier accumulateur d'énergie électrique (14) est connecté en série avec le premier commutateur électronique (13),
-- un deuxième circuit de charge (12) pour charger l'accumulateur d'énergie galvanique (8) avec une tension négative (v$_{hn}$) appliquée aux bornes d'entrée (6, 7) du dispositif de récupération d'énergie (3), **caractérisé en ce que** le deuxième circuit de charge (12)

- comprend un deuxième commutateur électronique (15), le deuxième commutateur électronique (15) comprenant un montage en série d'un troisième élément de commutation électronique (Q$_{1n}$) et d'un quatrième élément de commutation électronique (Q$_{2n}$), et
- comprend un deuxième accumulateur d'énergie électrique (16), le deuxième accumulateur d'énergie (16) comprenant une deuxième bobine (L$_n$), un deuxième condensateur (C$_n$) et un deuxième élément de blocage (D$_n$),

dans lequel le deuxième accumulateur d'énergie électrique (16) est connecté en série avec le deuxième commutateur électronique (15), **que** le premier circuit de charge (11) et le deuxième circuit de charge (12) sont montés en parallèle l'un avec l'autre, **que** le dispositif convertisseur (2) comprend un dispositif de commande (5) pour commander le premier commutateur électronique (13) et le deuxième commutateur électronique (15) en fonction d'une polarité de la tension (v$_h$) appliquée aux bornes d'entrée (6, 7) du dispositif de récupération d'énergie (3),

**que** le dispositif de commande (5) comprend un régulateur d'impédance (25) pour le réglage d'une impédance d'entrée (Z), qui est conçu pour modifier la commande des commutateurs électroniques (13, 15) en fonction d'une impédance d'entrée déterminée (Z') et d'une impédance d'entrée de consigne ($Z_{ref}$), et

**que** le dispositif de commande (5) comprend un capteur de mesure de tension (17) et un capteur de mesure de courant (18), le capteur de mesure de tension étant conçu pour mesurer la tension ($v_h$) appliquée aux bornes d'entrée (6, 7), le capteur de mesure de courant (18) étant conçu pour mesurer un courant ($i_h$) circulant du dispositif de récupération d'énergie (3) vers le convertisseur (4), et le dispositif de commande (5) étant conçu pour déterminer l'impédance d'entrée à partir de la tension mesurée et du courant mesuré.

2. Dispositif convertisseur selon la revendication 1, **caractérisé en ce que** le premier accumulateur d'énergie (14) est relié à la première borne de sortie (9) et le deuxième accumulateur d'énergie (16) est relié à la deuxième borne de sortie (10).

3. Dispositif convertisseur selon l'une quelconque des revendications 1 ou 2, **caractérisé en ce que** l'une des bornes d'entrée (7) est reliée à un nœud de référence ($K_0$).

4. Dispositif convertisseur selon l'une quelconque des revendications 1 à 3, **caractérisé en ce qu'**une première diode inverse ($F_{1p}$) formée en parallèle avec le premier élément de commutation électronique ($Q_{1p}$) et une deuxième diode inverse ($F_{2p}$) formée en parallèle avec le deuxième élément de commutation électronique ($Q_{2p}$) ont des sens de blocage opposés.

5. Dispositif convertisseur selon l'une quelconque des revendications 1 à 4, **caractérisé en ce qu'une** troisième diode inverse ($F_{1n}$) formée en parallèle avec le troisième élément de commutation électronique ($Q_{1n}$) et une quatrième diode inverse ($F_{2n}$) formée en parallèle avec le quatrième élément de commutation électronique ($Q_{2n}$) ont des sens de blocage opposés.

6. Dispositif convertisseur selon l'une quelconque des revendications 1 à 5, **caractérisé en ce que** le premier condensateur ($C_p$) et le deuxième condensateur ($C_n$) sont reliés chacun à l'une des bornes de sortie (9, 10).

7. Dispositif convertisseur selon l'une quelconque des revendications 1 à 6, **caractérisé en ce qu'**un condensateur de lissage ($C_{in}$) est monté en parallèle avec les bornes d'entrée (6, 7).

8. Dispositif convertisseur selon l'une quelconque des revendications 1 à 7, **caractérisé en ce**

**que** le dispositif de commande (5) comprend une première séquence de commutation en cas d'application d'une tension positive ($v_{hp}$) aux bornes d'entrée (6, 7), la règle suivante s'appliquant à la première séquence de commutation :

|          | $Z_{1p}$ | $Z_{2p}$ |
|----------|----------|----------|
| $Q_{1p}$ | 1        | 0        |
| $Q_{2p}$ | 1        | 0        |
| $Q_{1n}$ | 0        | 0        |
| $Q_{2n}$ | 0        | 0        |

où
$Q_{1p}$ et $Q_{2p}$ désignent deux éléments de commutation électroniques montés en série du premier commutateur électronique (13),
$Q_{1n}$ et $Q_{2n}$ désignent deux éléments de commutation électroniques montés en série du deuxième commutateur électronique (15),
$Z_{1p}$ et $Z_{2p}$ désigne deux états de commutation successifs de la première séquence de commutation, et
1 signifie MARCHE et 0 signifie ARRÊT.

9. Dispositif convertisseur selon l'une quelconque des revendications 1 à 8, **caractérisé en ce que** le dispositif de commande (5) comprend une deuxième séquence de commutation en cas d'application d'une tension négative ($v_{hn}$) aux bornes d'entrée (6, 7), la règle suivante s'appliquant à la deuxième séquence de commutation :

|          | $Z_{1n}$ | $Z_{2n}$ |
|----------|----------|----------|
| $Q_{1p}$ | 0        | 0        |
| $Q_{2p}$ | 0        | 0        |
| $Q_{1n}$ | 1        | 0        |
| $Q_{2n}$ | 1        | 0        |

où

$Q_{1p}$ et $Q_{2p}$ désignent deux éléments de commutation électroniques montés en série du premier commutateur électronique (13),
$Q_{1n}$ et $Q_{2n}$ désignent deux éléments de commutation électroniques montés en série du deuxième commutateur électronique (15),
$Z_{1n}$ et $Z_{2n}$ désigne deux états de commutation successifs de la deuxième séquence de commutation, et
1 signifie MARCHE et 0 signifie ARRÊT

10. Dispositif convertisseur selon l'une quelconque des revendications 1 à 9, **caractérisé en ce que** le dispositif de commande (5) comprend une unité de détection de polarité (19) pour détecter une tension positive ($v_{hp}$) et une tension négative ($v_{hn}$) du dispositif de récupération d'énergie (3).

11. Générateur d'énergie ayant

un dispositif convertisseur (2) selon l'une quelconque des revendications 1 à 10 et
un dispositif de récupération d'énergie (3) connecté aux bornes d'entrée (6, 7) pour fournir une tension ($V_h$).

12. Utilisation d'un dispositif convertisseur (2) selon l'une quelconque des revendications 1 à 10 avec, au choix, un dispositif de récupération d'énergie (3) pour fournir une tension ($v_{hp}$, $v_{hn}$) de même polarité ou une tension ($v_h$) de polarité alternée.

Fig. 1

Fig. 2

EP 3 334 027 B1

$Z_{1p}: 0 < t < D \cdot T_s$

Fig. 3

$Z_{2p}: D \cdot T_s < t < (1 - D) \cdot T_s$

Fig. 4

19

$Z_{1n}$: $0 < t < D \cdot T_s$

**Fig. 5**

$Z_{2n}$: $D \cdot T_s < t < (1 - D) \cdot T_s$

**Fig. 6**

$Z_{1p}: 0 < t < D \cdot T_s$

Fig. 7

$Z_{2p}: D \cdot T_s < t < (1 - D) \cdot T_s$

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009014702 A1

**In der Beschreibung aufgeführte Nicht-Patentliteratur**

- **ANUPRIYA SRIRAMULU et al.** Implementation of an Efficient AC-DC Converter for Low Voltage Energy Harvesting. *IEEE International Conference on Engineering Education,* 2012, 1-6
- **SINGH SHIKHA et al.** Power corrected bridgeless converter based switched mode power supply factor. *IET Power Electronics,* 2016, 1684-1693
- **LEE CHI-KWAN et al.** High-Frequency-Fed Unity Power-Factor AC-DC Power Converter With One Switching Per Cycle. *IEEE Transactions on Power Electronics,* 2015

- **P. D. MITCHESON et al.** Power processing circuits for electromagnetic, electrostatic and piezoelectric inertial energy scavengers. *Microsystem Technologies,* 2007, 1629-1635
- **CHEN-YU HSIEH et al.** A Simple Bi-directional Bridgeless AC/DC Buck-Boost Converter for Automotive Energy Harvesting. *40th annual conference of the IEEE Industrial Electronics Society,* 2014, 1937-1943